# EUROPEAN PATENT APPLICATION

(11) **EP 2 228 734 A1**
(43) Date of publication of application: **15.09.2010**
(21) Application number: 09155848.6
(22) Date of filing: 23.03.2009
(51) Int. Cl.: G06F 17/30, G07F 7/10, G06K 19/07

(54) **Portable electronic device and access control method in portable electronic device**

(30) Priority: 10.03.2009 JP 2009056927
(71) Applicant: Kabushiki Kaisha Toshiba, Minato-ku, Tokyo 105-8001 (JP)
(72) Inventor: Noumi, Akihiro, Tokyo 105-8001 (JP)
(74) Representative: HOFFMANN EITLE

(57) **Abstract**

An IC card (1) has a communication interface (25) which performs data communication with an IC card processing device as an external device and a data memory (22) which stores a record file in which a plurality of data objects are sequentially aligned. A CURRENT pointer setting table (23a) provided in an RAM (23) of the IC card (1) is a management table storing management information of each data object in a record file as an access target in the record files stored in the data memory (22). When a command requesting access to a specific data object is received from the IC card processing device, a control unit (21) of the IC card (1) accesses the data object specified by the command based on the management information stored in the CURRENT pointer setting table (23a).

## Description

The present invention relates to control over access to a data object stored in a file in, e.g., an IC card as a portable electronic device.

In an IC card, there is a file format called a binary record file that stores a plurality of data objects (record data) heretofore. Each data object in the binary record file can be accessed by sorting from the top of this file. In other words, in a conventional IC card, each data object in the binary record file cannot be directly accessed.

In recent years, data to be processed has been diversified with diversification of operation modes of an IC card. When data processed by the IC card is diversified, types of data or data structures become complicated in the IC card. For example, it is often the case that the binary record file stores a large amount of data as a plurality of data objects. However, as described above, in the conventional IC card, each data object in the binary record file must be sorted from the top of the file. In such access control, when data objects in the binary record file are diversified, processing for a specific data object takes a long time. Therefore, an IC card that enables efficiently accessing each data object in a binary record file has been demanded.

According to an aspect of the present invention, it is an object of the present invention to provide a portable electronic device that can efficiently access a plurality of data objects stored in a file and a control method of the portable electronic device.

A portable electronic device according to an aspect of the present invention has: a communication interface which performs communication with an external device; a data memory which stores a record file having a plurality of data objects; a management table which stores management information of each data object in the record file as an access target stored in the data memory; and an access control unit which accesses a data object specified by a command requesting access to the data object based on the management information stored in the management table when the command is received from the external device.

An access control method in a portable electronic device according to an aspect of the present invention includes: storing a record file having a plurality of data objects in a data memory; storing management information for the plurality of data objects in the record file as an access target in a table; and controlling access to a data object specified by a command specifying a specific data object to request access based on the management information of each data object stored in the table when the command is supplied from an external device.

The invention can be more fully understood from the following detailed description when taken in conjunction with the accompanying drawings, in which:
FIG. 1 is a block diagram schematically showing a structural example of an IC card and an IC card processing device;
FIG. 2 is a block diagram schematically showing a hardware structural example of the IC card;
FIG. 3 is a view schematically showing a structural example of a file stored in a data memory;
FIG. 4 is a view showing a data structure in a memory region of a record file storing a plurality of data objects;
FIG. 5 is a view showing a data structure in the memory region of the record file storing a plurality of data objects;
FIG. 6 is a structural example of a CURRENT pointer setting table;
FIG. 7 is a view showing a second structural example of the CURRENT pointer setting table;
FIG. 8 is a flowchart for explaining an example of CURRENT pointer setting table generation processing;
FIG. 9 is a flowchart for explaining processing for a read command or a write command specifying CURRENT;
FIG. 10 is a view showing an example of a processing result based on the write command specifying CURRENT;
FIG. 11 is a flowchart for explaining processing for a read command or a write command specifying NEXT;
FIG. 12 is a view showing a state of the CURRENT pointer setting table after processing a command specifying NEXT;
FIG. 13 is a view showing an example of a processing result based on a write command specifying NEXT;
FIG. 14 is a flowchart for explaining processing for a read command or a write command specifying PREVIOUS;
FIG. 15 shows a state of the CURRENT pointer setting table after processing a command specifying PREVIOUS; and
FIG. 16 is a view showing an example of a processing result based on a write command specifying PREVIOUS.

Hereinafter, an embodiment according to the present invention will be described in detail with reference to the accompanying drawings.

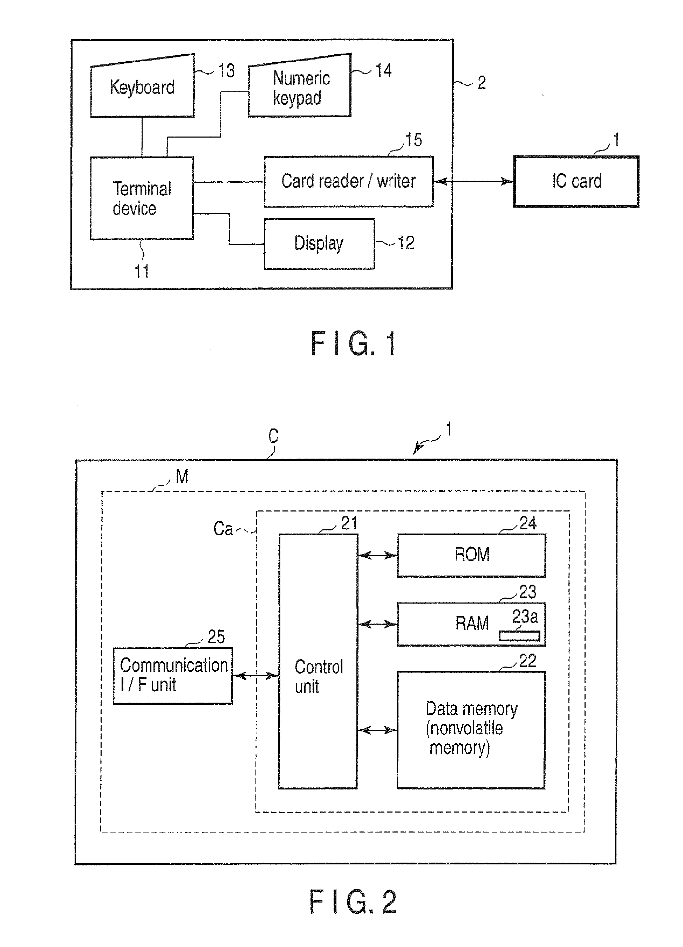

FIG. 1 is a block diagram schematically showing a structural example of an IC card (a portable electronic device) 1 according to this embodiment and an IC card processing device 2 as an external device having a communicating function with respect to the IC card 1.

As shown in FIG. 1, the IC card processing device 2 has a terminal device 11, a display 12, a keyboard 13, a numeric keypad 14, a card reader/writer 15, and others.

The terminal device 11 controls an entire operation of the IC card processing device. The terminal device 11 is constituted of a CPU, various kinds of memories, various kinds of interfaces, and others. For example, the terminal device 11 is formed of a personal computer (PC).

The terminal device 11 has a function of transmitting a command to the IC card 1 by using the card reader/writer 15, a function of performing various kinds of processing based on data received from the IC card 1, and others. For example, the terminal device 11 executes control of writing data in a data memory in the IC card 1 by transmitting a write command for data to the IC card 1 through the card reader/writer 15. Further, the terminal device 11 executes control of reading data from the data memory in the IC card 1 by transmitting a read command to the IC card 1.

The display 12 is a display device that displays various kinds of information under control of the terminal device 11. The keyboard 13 functions as an operation unit operated by an operator of the IC card processing device 2, and the operator inputs various kinds of operation commands or data to the keyboard 13. The numeric keypad 14 functions as an input unit that is used to input information such as a user ID or a password.

The card reader/writer 15 is an interface device that is used to communicate with the IC card 1. The card reader/writer 15 is formed of an interface conforming to a communication scheme of the IC card 1. For example, when the IC card 1 is a contact type IC card, the card reader/writer 15 is formed of, e.g., a contact unit that is used to be physically and electrically connected with a contact unit of the IC card 1.

Furthermore, when the IC card 1 is a contactless type IC card, the card reader/writer 15 is formed of an antenna, a communication controller, and others that are used to achieve wireless communication with the IC card 1. In the card reader/writer 15, power supply for the IC card 1, clock supply, reset control, and data transmission/reception are executed. Such functions enable the card reader/writer 15 to perform activation (boot) of the IC card 1, transmission of various kinds of commands, reception of a response for a transmitted command, and others based on control by the terminal device 11.

A hardware structural example of the IC card 1 will now be described.

Upon receiving supply of power from a host device, e.g., the IC card processing device 2 through the card reader/writer 15, the IC card 1 is activated (becomes operable). For example, when the IC card 1 includes a contact type communicating function, i.e., when the IC card 1 is formed as a contact type IC card, the IC card 1 is activated by receiving supply of operation power and an operation clock from the card reader/writer 15 through a contact unit as a communication interface.

Moreover, when the IC card 1 includes a contactless type communicating function, i.e., when the IC card 1 is formed as a contactless type IC card, the IC card 1 receives an electric wave from the card reader/writer 15 through, e.g., an antenna and a modulation/demodulation circuit as a communication interface, and generates operation power and an operation clock from this electric wave by using a non-illustrated power supply unit, thereby being activated.

FIG. 2 is a block diagram schematically showing a hardware structural example of the IC card 1 according to this embodiment.

The IC card 1 has a built-in module M in a case constituting a main body B. The module M is integrally formed in a state where one or more IC chips C are connected with an external interface for communication (a communication unit). The module M is buried in the main body B of the IC card 1. The module M of the IC card 1 has a CPU (a control element) 21, a data memory 22, an RAM (a working memory) 23, an ROM (a program memory) 22, a communication unit 25, and others as shown in FIG. 2.

The control unit 21 controls the entire IC card 1. The control unit 21 operates based on a control program and control data stored in the program memory 24 or the data memory 22, thereby realizing various kinds of functions. For example, the control unit 21 performs basic operation control over the IC card 1 by executing a program of an operating system. Moreover, the control unit 21 carries out various kinds of operation controls associated with operation modes of the IC card by executing an application program meeting a utilization purpose of the IC card 1.

The data memory 22 is a rewritable nonvolatile memory. The data memory 22 is formed of a data writable/rewritable nonvolatile memory such as an EEPROM (Electrically Erasable Programmable Read-Only Memory) or a flash ROM. A control program meeting an operation purpose of the IC card 1 or various kinds of data are written in the data memory 22. In the data memory 22, various kinds of files based on a standard of the IC card 1 are defined, and various kinds of data are written in these files. An example of a file stored in the data memory 22 will be described later.

The RAM 23 is a volatile memory that functions as a working memory. The RAM 23 functions as a buffer that temporarily stores, e.g., data in processing. For example, in the RAM 23 is provided, e.g., a management table (a CURRENT pointer setting table) 23a storing information indicative of an object that is in a current state in each record file.

The ROM 24 is a non-volatile memory such as a mask ROM that functions as a program memory. The ROM 24 stores a control program or control data in advance. The ROM 24 is incorporated in the IC card 1 in a state where a control program or control data is stored on a manufacturing stage of the IC card. The control program or the control data stored in the ROM 24 controls a basic operation of the IC card and is incorporated in accordance with a specification of the IC card 1 in advance.

The communication unit 25 is an interface that communicates with the IC card processing apparatus 2 through the reader/writer 15. When the IC card 1 is realized as a contact type IC card, the communication unit 25 is constituted of a communication control unit and a contact unit that physically and electrically come into contact with the reader/writer 15 to transmit or receive a signal. Further, when the IC card 1 is realized as a contactless type IC card, the communication unit 25 is constituted of, e.g., a communication control unit such as a modulation/demodulation circuit that wirelessly communicates with the reader/writer 15 and an antenna that is used to transmit/receive an electric wave.

Files stored in the data memory 22 will now be described.

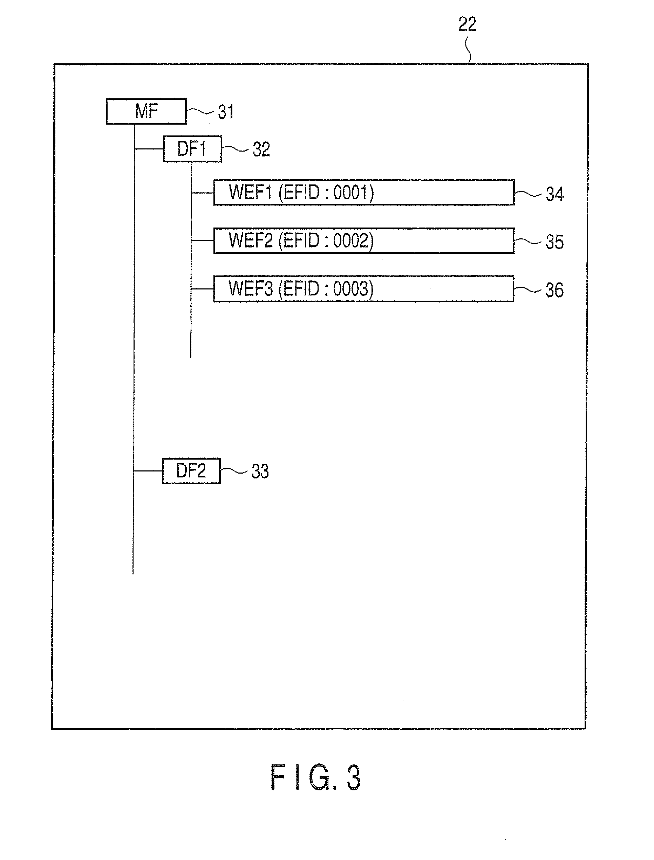

FIG. 3 is a view schematically showing a structural example of files stored in the data memory 22.

FIG. 3 shows a file structural example in the portable electronic device such as an IC card. The example shown in FIG. 3 is a file structural example defined in ISO/IEC7816-4 as a standard concerning portable electronic devices such as an IC card. In the file structural example depicted in FIG. 3, various kinds of files are managed in a tree structure.

As shown in FIG. 3, in the data memory 22, a plurality of fines having a hierarchy structure including an MF (Master File), a DF (Dedicated File), and an EF (Elementary File), and others. In the structural example depicted in FIG. 3, on a level following the master file (MF) 31 on the highest level, a first DF (DF 1) 32 and a second DF (DF 2) 33 are present. On a level following the first OF, a first EF (EFID: 0001) 34, a second EF (EFID: 0002), and a third EF (EFID: 0003) 36 are present.

The MF 31 is placed at the top in the file structure for various kinds of files stored in the data memory 22. The respective DFs (DF 1 and DF 2) 32 and 33 are provided in accordance with, e.g., applications. In this case, each of DFs 32 and 33 functions as a folder corresponding to each application. Each of EFs 34, 35, and 36 is a record file (a data file) storing actual data. That is, each EF 34, 35, or 36 provided under the DF 1 stores data that is used in an application associated with the DF 1. It is to be noted that the EF can be provided on the level immediately below the MF 31. Further, in the following description, it is assumed that the first EF 34 and the second EF 35 are binary record files each storing a plurality of data objects.

A structure of the record file (EF) will now be described.

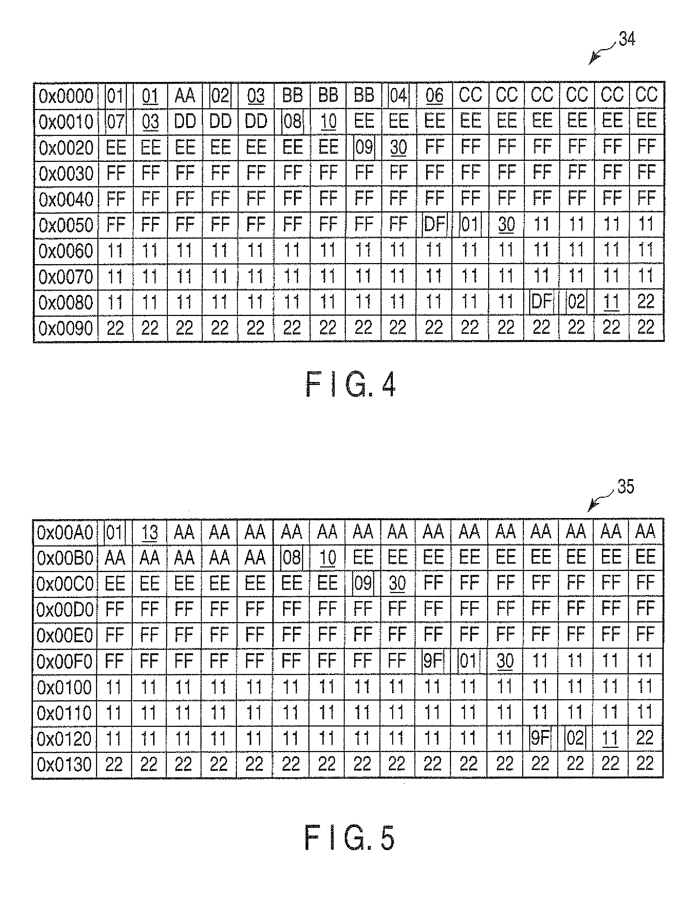

Each of FIGS. 4 and 5 is a view showing a data structure of a record file in a memory region of the data memory 22. FIG. 4 shows a data structure of a first EF (EFID: 0001) 34. FIG. 5 shows a data structure of the second EF (EFID: 0002).

The record file depicted in FIG. 4 or 5 is formed of a plurality of data objects. Each data object is constituted of an identifier (Tag), a data length (Length), and a data value (Value). The data object having such a data structure is called, e.g., a TLV object. The TLV object has a data structure in which data of the identifier "Tag", data of the data length "Length", and data of the data value "Value" are sequentially coupled.

An entire data size of such a TLV object can be judged based on a data size of the "data value" indicated by the "data length" if a data size of the "identifier" and a data size of the "data length" are determined. Therefore, the plurality of TLV objects can be continuously stored in a storage region of the record file. In the record file storing the TLV objects depicted in FIG. 4 or 5, an identifier, a data length, and a data value of each data object are sequentially arranged from the top of a data region in the record file. Therefore, even in case of the record file storing the plurality of data objects, sequentially confirming the "identifier" and the "data length" of each data object from the top of the file enables detecting a specific data object. In general, lengths (sizes) of an "identifier" and a "data length" are determined based on the standard, e.g., ISO in a record file used for an IC card. Therefore, a length (a size) of an entire object can be judged based on a length (a size) of a "data value" indicated by a "data length".

Each of the structural examples depicted in FIGS. 4 and 5 shows a state where the plurality of TLV objects are stored in the record file.

In FIGS. 4 and 5, a storage region of an identifier of each data object is a region where a numerical value is surrounded by a rectangular. A storage region of a data length of each data object is a region where a numerical value is underlined. A storage region of a data value of each data object is a region where a numerical value having no rectangular and no underline given thereto is written (a region excluding identifiers and data lengths). However, one column at a left end in each of FIGS. 4 and 5 indicates an example of each address (a top address of each row) in the memory. It is to e noted that all numerical values depicted in FIGS. 4 and 5 are hexadecimal numbers.

For example, in the record file depicted in FIG. 4, an identifier of a top TLV object (a first object) in this file is "01". A data length of this first object is "01". Therefore, "AA" as a data value of the first object is stored in a region corresponding to one byte following "01" as the data length of the first object. Furthermore, an identifier "02" of a subsequent TLV object (a second object) is stored to follow the data value "AA" of the first object, and a data length "03" of the second object is stored to follow the identifier "02". In regions corresponding to 3 bytes following "03" as the data length of the second object, "BB", "BB", and "BB" as data values of the second object are stored.

In the record file having such a data structure as depicted in each of FIGS. 4 and 5, sequentially confirming an identifier and a data length of each data object from the top enables accessing a specific data object as explained above. In other words, in such a record file as depicted in FIG. 4 or 5, respective data objects must be sequentially retrieved from the top in order to directly access a specific data object. Therefore, this IC card 1 holds information required to directly access each data object in the record file. Additionally, it is assumed that one data object in the record file can be set to a CURRENT state in this IC card 1.

Management of the data objects in the record file will now be described.

In this IC card 1, the data objects in the record file are managed by using a CURRENT pointer setting table 23a as a management table. Further, the CURRENT pointer setting table 23a also corresponds to information indicative of a current state of a data object. In the structural example depicted in FIG. 2, the CURRENT pointer setting table 23a is provided in the RAM 23. Incidentally, it is good enough for the CURRENT pointer setting table 23a to be present in a storage region where data can be written or rewritten by the control unit 21. For example, the CURRENT pointer setting table 23a may be provided in the data memory 22.

The CURRENT pointer setting table 23a is generated and updated by the control unit 21. For example, the control unit 21 generates the CURRENT pointer setting table 23a in regard to a record file selected as a current file. In this case, when a specific record file is selected as a current file at the time of activation of the IC card 1 or based on a command from an external device, generating the CURRENT pointer setting table 23a can suffice. Furthermore, the data memory 22 may store the CURRENT pointer setting table 23a with respect to each record file. In this case, the control unit 21 appropriately updates the CURRENT pointer setting table 23a in accordance with each of various kinds of processing contents.

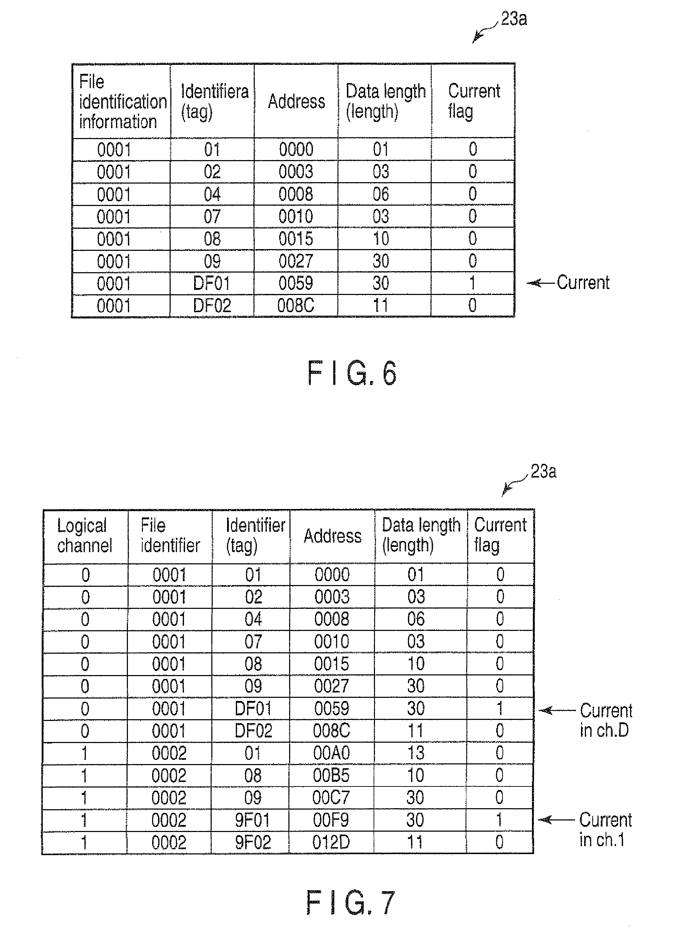

FIG. 6 shows a structural example of the CURRENT pointer setting table 23a for the first EF (EFID: 0001) as a record file.

In the structural example depicted in FIG. 6, the CURRENT pointer setting table 23a stores management information of all data objects in the first EF 34 depicted in FIG. 4. That is, the CURRENT pointer setting table 23a depicted in FIG. 6 stores information such as file identification information (EFID), identifier (Tag) information, address (Address) information, data length (Length) information, and a current flag (a current pointer Flag) as management information of each data object in the first EF 34 shown in FIG. 4.

An EFID stored in the CURRENT pointer setting table 23a is information that is used to identify a record file storing each object. The example shown in FIG. 6 is a table that manages data objects in the first EF 34 depicted in FIG. 4. Therefore, in the example depicted in FIG. 6, an EFID of each data object is "0001". Identification information and data length information stored in the CURRENT pointer setting table 23a are an identifier and a data length of each data object. In the example shown in FIG. 6, as the identifier information and the data length information of each data object, an identifier and a data length themselves of each data object stored in the first EF 34 depicted in FIG. 4 are stored.

Address information stored in the CURRENT pointer setting table 23a is information indicative of a top address of each data objected in the data memory 22. The address information of each data object is discriminated sequentially from an identifier and a data length of each data object in the first EF 34 depicted in FIG. 4. Furthermore, the current flag stored in the CURRENT pointer setting table 23a indicates whether a corresponding data object is in a current state. For example, the current flag of the data object that is in the current state is set to "1", and the current flag of the data object that is not in the current state is set to "0".

FIG. 7 is a view showing a second structural example of the CURRENT pointer setting table 23a.

FIG. 7 shows a structural example of the CURRENT pointer setting table 23a for the first EF 34 depicted in FIG. 4 and the second EF 35 shown in FIG. 5.

The CURRENT pointer setting table 23a in the second structural example holds information indicative of a current state in accordance with each logical channel. In the structural example depicted in FIG. 7, the CURRENT pointer setting table 23a stores management information of all data objects in the first EF 34 shown in FIG. 4 and the second EF 35 depicted in FIG. 5. Here, it is assumed that the first EF 34 is selected as a current file in a logical channel "0" and the second EF 35 is selected as a current file in a logical channel "1". That is, the CURRENT pointer setting table 23 shows a data object in the first EF 34 that is in the current state in the logical channel "0" and a data object in the second EF 35 that is in the current state in the logical channel "1".

The logical channel generally means a logical channel in which the control unit 21 can execute various kinds of processing in the IC card 1. Each logical channel in the IC card is defined based on, e.g., ISO/IEC7816-4. That is, in the IC card 1, the control unit 21 can carry out various kinds of processing in parallel in accordance with each logical channel. In this case, the IC card 1 holds each processing content (e.g., current information) in each logical channel.

For example, there is an IC card that supports four logical channels (Ch. 0, Ch. 1, Ch. 2, and Ch. 3). In this case, if a default logical channel is "Ch. 0", the logical channel "Ch. 0" can be constantly utilized, and processing that open the logical channels (Ch. 1, Ch. 3, and Ch. 3) (make these channel available) in response to a command specifying a logical channel (e.g., a manage channel command) must be carried out.

The CURRENT pointer setting table 23a depicted in FIG. 7 manages data objects in each record file in accordance with each logical channel as management information of each data object in the first EF 34 depicted in FIG. 4 and the second EF shown in FIG. 5. The CURRENT pointer setting table 23a shown in FIG. 7 stores information, e.g., logical channel information, EFID information, identifier (Tag) information, address (Address) information, data length (Data Length) information, a current flag (a current pointer Flag), and others as management information of each data object.

The logical channel information stored in the CURRENT pointer setting table 23a is information indicative of a logical channel in which a record file storing each data object is selected. The example depicted in FIG. 7 is a state where the first EF 34 shown in FIG. 4 is selected in the logical channel "0" and the second EF depicted in FIG. 5 is selected in the logical channel "1". Therefore, as shown in FIG. 7, logical information associated with each data object having the EFID "0001" is "0" and logical channel information associated with each data object having the EFID "0002" is "1".

Each identifier and each data length stored in the CURRENT pointer setting table 23a are an identifier and a data length themselves of each data object. In the example shown in FIG. 6, an identifier and a data length of each data object stored in the first EF 34 depicted in FIG. 4 are stored as the identifier and the data length of each data object. Each address stored in the CURRENT pointer setting table 23a is information indicative of a top address of each data object in the data memory 22. The address information of each data object is specified sequentially from the identifier and the data length of each data object in the first EF 34 shown in FIG. 4 and the second EF 35 depicted in FIG. 5.

Further, the current flag stored in the CURRENT pointer setting table 23a is indicative of whether a corresponding data object is in the current state in each logical channel. In the example shown in FIG. 7, "1" is set to the current flag of each of an object that is in the current state in the logical channel "0" and a data object that is in the current state in the logical channel "1".

Current pointer setting table creation processing will now be described.

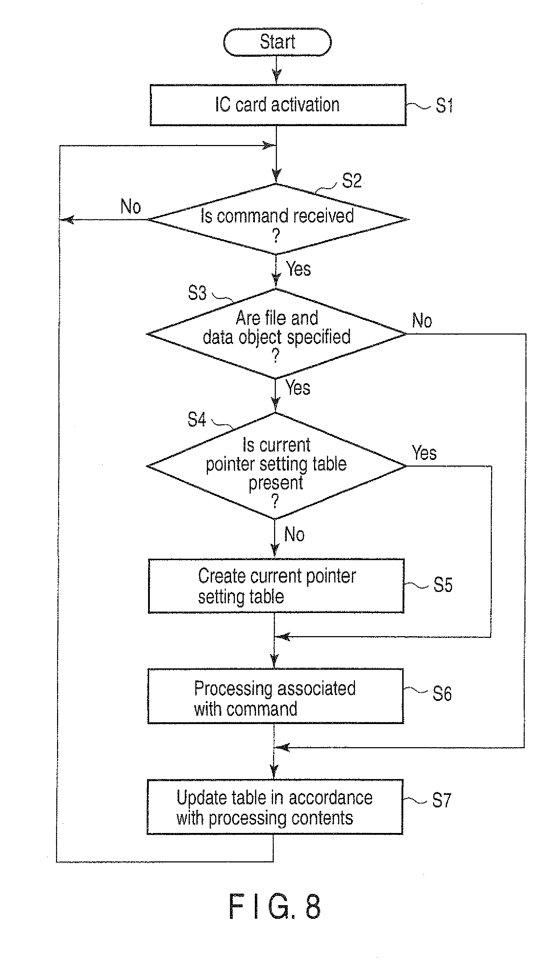

FIG. 8 is a flowchart for explaining an example of creation processing for the CURRENT pointer setting table 23a.

First, the IC card 1 is activated based on supply of the power from a host device, e.g., the IC card processing device 2 (a step S1). In this state, the IC card 1 can receive a command from the IC card processing device 2 (a step S2). When a command is received from the IC card processing device 2, the control unit 21 of the IC card 1 judges whether the received command is a command that specifies identification information (EFID) of a record file and an identifier (Tag) of a data object (a step S3).

When the command that specifies the record file and the data object is received (the step S3, YES), the control unit 21 judges whether the CURRENT pointer setting table 23a is present in the RAM 23 (a step S4). For example, it can be considered that the CURRENT pointer setting table 23a is not created in the RAM 23 immediately after activation of the IC card 1. Furthermore, when the CURRENT pointer setting table 23a is present, the control unit 21 omits the CURRENT pointer setting table creation processing.

If it is determined that the CURRENT pointer setting table 23a is not present (the step S4, NO), the control unit 21 creates the CURRENT pointer setting table 23a for the record file specified by the received command (a step S5). In this case, management information of each data object in the record file is extracted by sorting data in the record file specified by the received command. That is, the control unit 21 reads an identifier and a data length of each data object sequentially from the top of the record file. As a result, the control unit 21 sequentially discriminates a top address, an identifier, and a data length of each data object.

The identifier and the data length of each data object is information itself read from the record file. The top address of each data object is discriminated based on, e.g., a data length of each data object with the top address of the record file being determined as a reference. That is, a top address of a first data object in the record file is the top address of the record file. Top addresses of second and subsequent data objects are discriminated based on data lengths of respective previous data objects. For example, the top address of the second or subsequent data object has an address value obtained by adding a size of an identifier and a size of a data length of an immediately preceding object and a size of a data value indicated by the data length to a top address of the immediately preceding data object.

When the management information of each data object in the record file specified by the received command is extracted, the control unit 21 stores the extracted management information of each data object in association with an EFID of the record file, thereby creating the CURRENT pointer setting table 23a. In this case, the control unit 21 sets the current flag in management information of a data object specified by the received command in the CURRENT pointer setting table 23a to be created. As a result, such a CURRENT pointer setting table 23a as depicted in FIG. 6 is created in the RAM 23.

It is to be noted that, when executing processing in the plurality of logical channels, the control unit 21 creates such a CURRENT pointer setting table 23 associated with the plurality of logical channels as shown in FIG. 7 since the above-explained table is created in accordance with each record file selected in each logical channel.

When the CURRENT pointer setting table 23a for the record file specified by the received command is created, or when the CURRENT pointer setting table 23a is already present, the control unit 21 executes processing requested by the received command (a step S6). When the processing requested by the received command is executed, the control unit 21 updates the CURRENT pointer setting table 23a in accordance with contents of the executed processing (a step S7). For example, when a data object that is in the current state is changed, the control unit 21 updates a state of the current flag in the CURRENT pointer setting table 23a.

Processing for a command that specifies a data object that is the current state will now be explained.

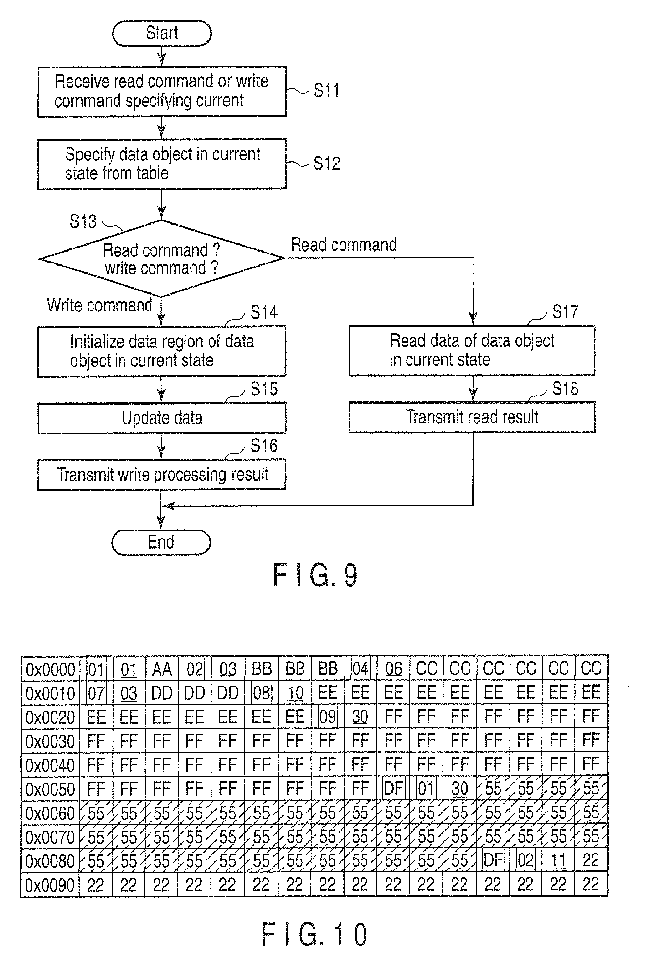

FIG. 9 is a flowchart for explaining processing for a command (a read command or a write command specifying CURRENT) that specifies a data object that is in the current state.

First, it is assumed that the IC card 1 has received a read command or a write command specifying CURRENT from a host device, e.g., the IC card processing device 2 (a step S11). When the command that specifies a data object as CURRENT is received, the control unit 21 in the IC card 1 reads the CURRENT pointer setting table 23a associated with a corresponding record file. That is, the control unit 21 discriminates a logical channel of the received command. When the logical channel of the received command is discriminated, the control unit 21 specifies a data object that is in the current state in the logical channel of the received command from the CURRENT pointer setting table 23a (a step S12).

For example, when the CURRENT pointer setting table 23a is in such a state as shown FIG. 7, the control unit 21 that has received the command with the logical channel "0" confirms a current flag of each data object with the logical channel "0" from the CURRENT pointer setting table 23a. That is, the control unit 21 retrieves a data object having the logical channel "0" and the current flag "1" from the CURRENT pointer setting table 23a. In the example shown in FIG. 7, the data object having the logical channel "0" and the current flag "1" is a data object having an EFID "0001" and a tag "DF01". Therefore, the control unit 21 determines that the data object having the tag "DF01" in a record file having the EFID "0001" is in the current state.

This data object having the EFID "0001" and the tag "DF01" determined to be in the current state is determined to have a top address "0059" based on the CURRENT pointer setting table 23a as shown in FIG. 7. In this manner, the control unit 21 can readily discriminate the top address of the data object that is in the current state by making reference to the CURRENT pointer setting table 23a in this manner. As a result, the control unit 21 can directly access the data object that is in the current state.

When the received command specifies the data object in the current state as an access target, the control unit 21 judges whether the received command is a read command or a write command (a step S13).

When the received command is a write command (the step S13, the write command), the control unit 21 executes processing of writing data specified by the received command in a data region of the data object in the current state (update processing) (steps S14 to S16). Here, the control unit 21 specifies a top address of the data object in the current state by using the CURRENT pointer setting table 23a.

That is, the control unit 21 initializes a region (a data region) of a data value (Value) stored to follow an identifier (Tag) and a data length (Length) from the top address of the data object that is in the current state (the step S14). When the data region of the data object in the current state is initialized, the control unit 21 writes data specified by the received command in the initialized data region (the step S15). When the data in the data region of the data object that is in the current state is updated, the control unit 21 generates response data including information indicative of a result of the write processing. The control unit 21 transmits the regenerated response data to the IC card processing device 2 as a transmission source of this received command (the step S16).

When the received command is a read command (the step S13, the read command), the control unit 21 executes processing of reading data of the data object that is in the current state (steps S17 and S18). Here, the control unit 21 specifies a top address of the data object in the current state by using the CURRENT pointer setting table 23a.

That is, the control unit 21 reads a data value (Value) stored to follow an identifier (Tag) and a data length (Length) from the top address of the data object in the current state (the step S17). When the data of the data object that is in the current state is read out, the control unit 21 generates a response data including the read data, and transmits the generated response data to the IC card processing device 2 as a transmission source of the received command (the step S18).

The processing for the read command or the write command specifying CURRENT is executed based on the above-explained procedure. For example, FIG. 10 is a view showing an example of a result of processing based on the write command specifying CURRENT. FIG. 10 shows an example where a data object in the current state in the first EF 34 depicted in FIG. 4 is rewritten by making reference to the CURRENT pointer setting table 23a depicted in FIG. 7.

In the example shown in FIG. 10, data in a shaded region in the drawing is rewritten in the first EF 34 depicted in FIG. 4. "30" as a data length of a data object is stored in a region immediately before the data region having rewritten data depicted in FIG. 10, and "DF01" as an identifier of the data object is stored in a region immediately before this region. That is, the example depicted in FIG. 10 shows that each data value (Value) of the data object having the identifier "DF01" is rewritten. This data object having the identifier "DF01" is the data object in the current state shown in the CURRENT pointer setting table 23a depicted in FIG. 7. That is, when the CURRENT pointer setting table 23a is in such a state as depicted in FIG. 7, the IC card 1 that has received the write command specifying CURRENT rewrites the data object in the first EF 34 in FIG. 4 as shown in FIG. 10.

It is to be noted that the data object in the current state does not have to be changed in the processing for the read command or the write command specifying CURRENT. Therefore, in the above-explained example, the CURRENT pointer setting table 23a is not updated. However, when information stored in the CURRENT pointer setting table 23a varies due to the executed processing, the control unit 21 updates the CURRENT pointer setting table 23a. For example, when a data length of a data object in the current state is changed due to, e.g., rewrite processing, a top address of each data object following the data object that is in the current state is also changed. In such a case, the control unit 21 discriminates the changed top address of each data object to update the CURRENT pointer setting table 23a.

In the processing for the read command or the write command specifying CURRENT, repeatedly reading or writing data with respect to a data object in the current state shown in the CURRENT pointer setting table is easy. For example, when a command specifying CURRENT is continuously issued, the IC card can immediately specify a data object in the current state by using the CURRENT pointer setting table and efficiently access the data object in the current state.

Processing for a command that specifies a data object following a data object in the current state (a command specifying NEXT) will now be described.

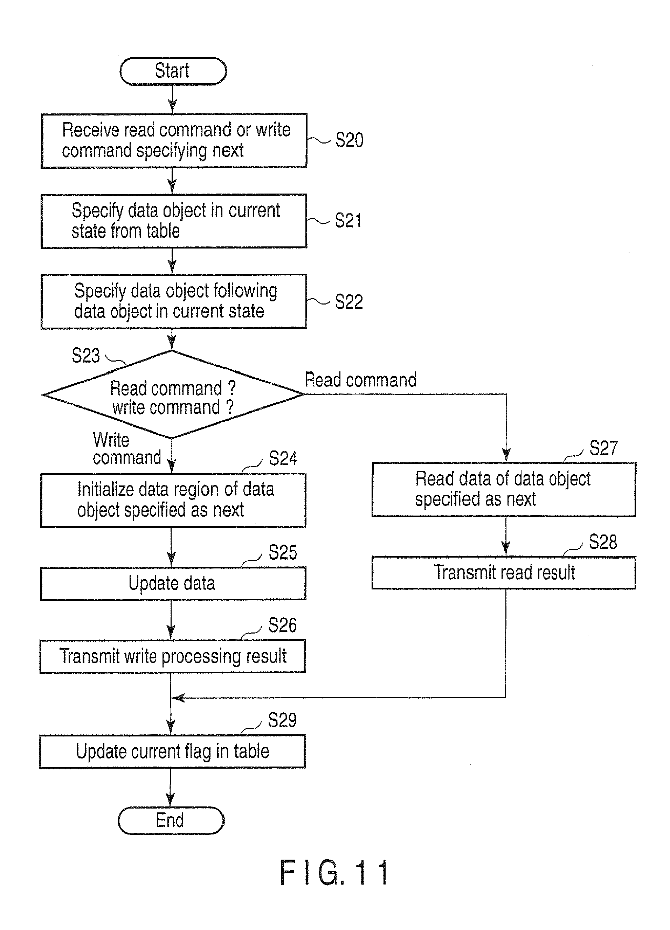

FIG. 11 is a flowchart for explaining processing for a read command or a write command specifying NEXT.

First, it is assumed that the IC card 1 has received a read command or a write command specifying NEXT from a host device, e.g., the IC card processing device 2 (a step S20). When the command specifying NEXT is received, the control unit 21 in the IC card 1 discriminates a logical channel of the received command. When the logical channel of the received command is discriminated, the control unit 21 specifies a data object in the current state in the logical channel of the received command from the CURRENT pointer setting table 23a (a step S21).

As explained above, the data object in the current state is discriminated based on whether a current flag is set to "1". When the data object in the current state is specified, the control unit 21 further specifies a data object following the data object in the current state (a data object specified as NEXT) (a step S22).

For example, when the CURRENT pointer setting table 23a is in such a state as shown in FIG. 7, the control unit 21 that has received the command specifying NEXT with the logical channel "0" retrieves a data object having a logical channel "0" and a current flag "1" from the CURRENT pointer setting table 23a. In the example depicted in FIG. 7, the data object having the logical channel "0" and the current flag "1" (the data object in the current state) is a data object having an EFID "0001" and a tag "DF01". In this case, the data object following the data object in the current state is a data object having the EFID "0001" and a tag "DF02". Therefore, the control unit 21 determines that the data object having the EFID "0001" and the tag "DF01" as the data object specified as NEXT.

The data object having the EFID "0001" and the tag "DF01" determined as the data object specified as NEXT is determined to have a top address "008C" by using the CURRENT pointer setting table 23a depicted in FIG. 7. The control unit 21 can readily judge the top address of the data object specified as NEXT (the data object following the data object in the current state) by making reference to the CURRENT pointer setting table 23a in this manner. As a result, the control unit 21 can directly access the data object specified as NEXT.

When the data object specified as NEXT that is an access target is specified by the received command, the control unit 21 judges whether the received command is a read command or a write command (a step S23).

When the received command is a write command (the step S23, the write command), the control unit 21 executes processing of writing data specified by the received command in a data region of the data object specified as NEXT (update processing) (steps S24 to S26). Here, the control unit 21 specifies a top address of the data object specified as NEXT by using the CURRENT pointer setting tale 23a.

That is, the control unit 21 initializes a region (a data region) of a data value (Value) stored to follow an identifier (Tag) and a data length (Length) from the top address of the data object specified as NEXT (the step S24). When the data region of the data object specified as NEXT is initialized (the step S25), the control unit 21 writes data specified by the received command in the initialized data region (the step S25). When the data in the data region of the data object specified as NEXT is updated, the control unit 21 generates response data including information indicative of a result of the write processing. The control unit 21 transmits the generated response data to the IC card processing device 2 as a transmission source of the received command (the step S26).

When the received command is a read command (the step S23, the read command), the control unit 21 executes processing of reading data of the data object specified as NEXT (steps S27 and S28). Here, the control unit 21 specifies a top address of the data object specified as NEXT by using the CURRENT pointer setting table 23a.

That is, the control unit 21 reads a data value (Value) stored to follow an identifier (Tag) and a data length (Length) from the top address of the data objected specified as NEXT (the step S27). When the data of the data object specified as NEXT is read, the control unit 21 generates response data including the read data and transmits the generated data to the IC card processing device 2 as a transmission source of the received command (the step S28).

In the processing for the read command or the write command specifying NEXT, a current state of the data object must be changed. The data object specified as NEXT is changed to the current state. Therefore, the control unit 21 updates the current flag in the CURRENT pointer setting table 23a (a step S29). In this update processing, the current flag of the data object specified as NEXT is rewritten to "1", and the current flag of the data object in the current state is rewritten to "0".

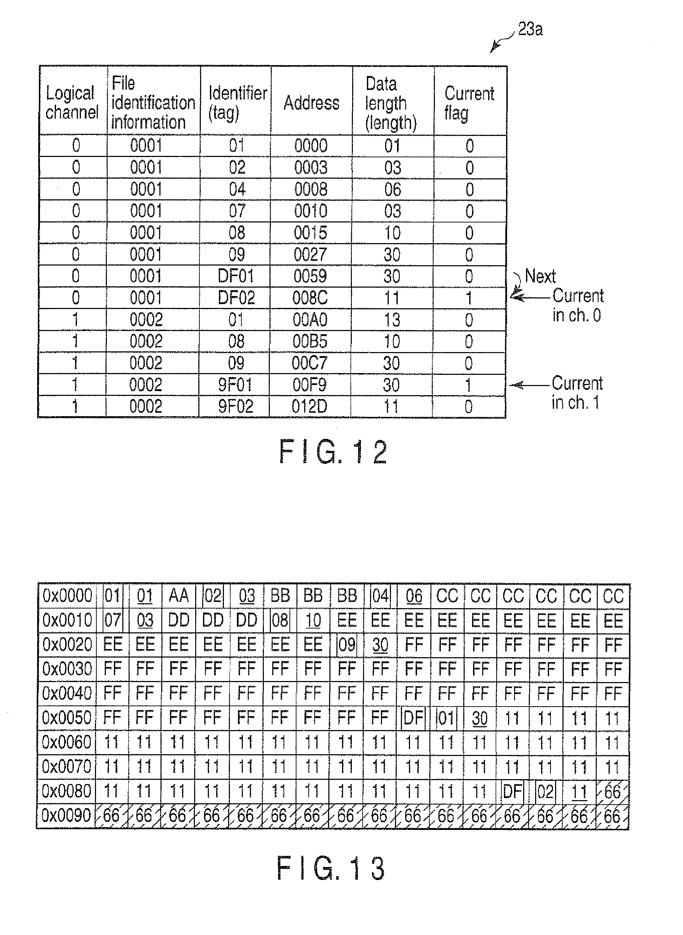

For example, FIG. 12 shows a state of the CURRENT pointer setting table 23a after processing a command specifying NEXT. FIG. 12 depicts a state after processing a command specifying NEXT that is received when the CURRENT pointer setting table 23a is in the state shown in FIG. 7. That is, when a command specifying NEXT is executed, a current state of a data object is changed to the next data object. This means that a data object whose current flag is set to "1" sequentially shifts in such a CURRENT pointer setting table 23a as depicted in FIG. 7 or 12 every time the command specifying NEXT is executed.

Based on the above-explained procedure, processing for the read command or the write command specifying NEXT is executed. For example, FIG. 13 is a view showing an example of a result of processing based on the write command specifying NEXT. That is, FIG. 13 shows a result of processing of the write command specifying NEXT that is received when the CURRENT pointer setting table 23a is in the state shown in FIG. 7.

In the example shown in FIG. 13, data in a shaded region in the drawing is rewritten in the first EF 34 depicted in FIG. 4. "11" as a data length of the data object is stored in a region immediately before the data region having the rewritten data shown in FIG. 13, and "DF02" as an identifier of the data object is stored in a region immediately before this region.

That is, in the example depicted in FIG. 13, each data value (Value) of the data object having the identifier "DF02" is rewritten. This data object having the identifier "DF02" is a data object (a data object specified as NEXT) following the data object in the current state shown in the CURRENT pointer setting table 23a in FIG. 7. That is, when the CURRENT pointer setting table 23a is in such a state as shown in FIG. 7, the IC card 1 having received the write command specifying NEXT rewrites the data object in the first EF 34 in FIG. 4 as shown in FIG. 13.

It is to be noted that the control unit 21 likewise updates the CURRENT pointer setting table 23a when information other than the current flag in the CURRENT pointer setting table 23a is changed due to executed processing. For example, when a data length of a data object that is in the current state is changed due to, e.g., rewrite processing, a top address of each data object following the data object in the current state is also changed. In such a case, the control unit 21 discriminates the changed top address of each data object to update the CURRENT pointer setting table 23a.

In the processing for the read command or the write command specifying NeXT, the data object in the current state shown in the CURRENT pointer setting table can be determined as a reference to sequentially read or write data in the data objects. For example, when a command specifying NEXT is continuously given, the IC card can efficiently execute processing of sequentially accessing the next data object by using the CURRENT pointer setting table with the data object in the current state being determined as a reference.

Processing for a command that specifies a data object immediately before a data object in a current state (a command specifying PREVIOUS) will now be described.

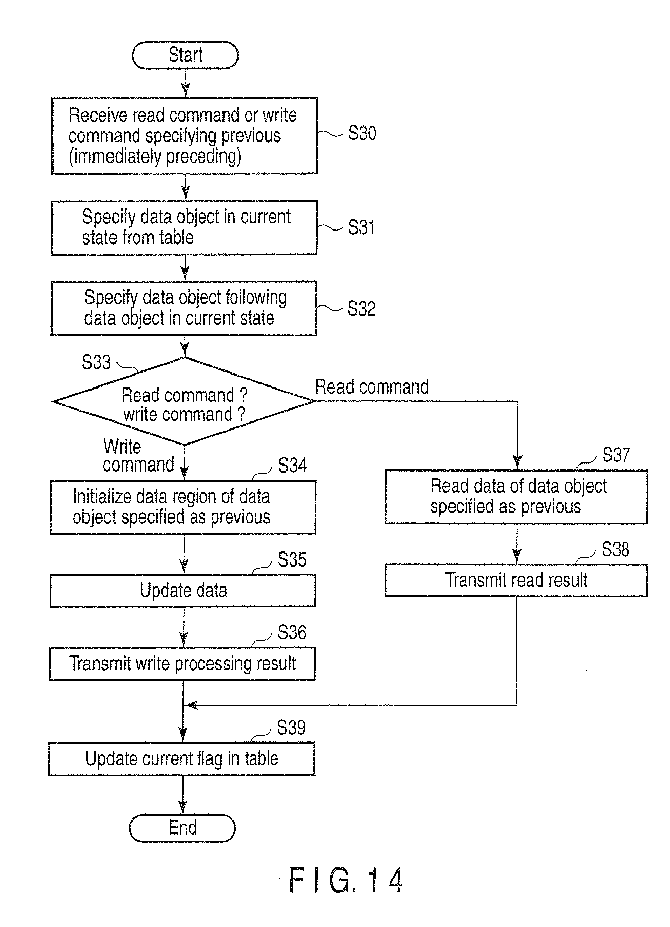

FIG. 14 is a flowchart for explaining processing for a read command or a write command specifying PREVIOUS.

First, it is determined that the IC card 1 has received a read command or a write command specifying PREVIOUS from a host device such as an IC card processing device 2 (a step S30). When the command specifying PREVIOUS is received, the control unit 21 in the IC card 1 discriminates a logical channel of the received command. When the logical channel of the received command is discriminated, the control unit 21 specifies a data object in a current state in the logical channel of the received command from the CURRENT pointer setting table 23a (a step S31).

As explained above, the data object in the current state is discriminated based on whether its current flag is "1" in the CURRENT pointer setting table 23a. When the data object in the current state is specified, the control unit 21 specifies a data object (a data object specified as PREVIOUS) immediately before the data object in the current state (a step S32).

For example, when the CURRENT pointer setting table 23a is in such a state as shown in FIG. 7, the control unit 21 that has received the command specifying PREVIOUS in a logical channel "0" retrieves a data object having a logical channel "0" and a current flag "1" from the CURRENT pointer setting table 23a. In the example depicted in FIG. 7, the data object having the logical channel "0" and the current flag "1" (the data object in the current state) is a data object having an EFID "0001" and a tag "DF01". In this case, a data object immediately before the data object in the current state is a data object having an EFID "0001" and a tag "09". Therefore, the control unit 21 determines that the data object having the EFID "0001" and the tag "09" as a data object specified as PREVIOUS.

That data object with the EFID "0001" and the tag "09" determined as the data object specified as PREVIOUS is determined to have a top address "0027" based on the CURRENT pointer setting table 23a depicted in FIG. 7. The control unit 21 can readily discriminate the top address of the data object specified as PREVIOUS (the data object immediately preceding the data object in the current state) by making reference to the CURRENT pointer setting table 23a in this manner. As a result, the control unit 21 can directly access the data object specified as PREVIOUS.

When the data object specified as PREVIOUS that is an access target is specified by the received command, the control unit 21 judges whether the received command is a read command or a write command (a step S33).

When the received command is a write command (the step S33, the write command), the control unit 21 executes processing of writing data specified by the received command in a data region of the data object specified as PREVIOUS (update processing) (steps S34 to S36). Here, the control unit 21 specifies a top address of the data object specified as PREVIOUS by using the CURRENT pointer setting table 23a.

That is, the control unit 21 initializes a region (a data region) of a data value (Value) stored to follow an identifier (Tag) and a data length (Length) from the top address of the data object specified as PREVIOUS (a step S34). When the data region of the data object specified as PREVIOUS is initialized, the control unit 21 writes data specified by the received command in the initialized data region (a step S35). When the data in the data region of the data object specified as PREVIOUS is updated, the control unit 21 generates response data including information indicative of a result of write processing. The control unit 21 transmits the generated response data to the IC card processing device 2 as a transmission source of the received command (a step S36).

When the received command is a read command (the step S33, the read command), the control unit 21 executes processing of reading data of the data object specified as PREVIOUS (steps S37 and S38). Here, the control unit 21 specifies a top address of the data object specified as PREVIOUS by using the CURRENT pointer setting table 23a.

That is, the control unit 21 reads a data value (Value) stored to follow an identifier (Tag) and a data length (Length) from the top address of the data object specified as PREVIOUS (the step S37). When the data of the data object specified as PREVIOUS is read, the control unit 21 generates response data including the read data and transmits the generated data to the IC card processing device 2 as a transmission source of the received command.

In the processing for the read command or the write command specifying PREVIOUS, a current state of a data object must be changed. That is, the data object specified as PREVIOUS is changed to the current state. Therefore, the control unit 21 updates the current flag in the CURRENT pointer setting table 23a (a step S39). In this update processing, the current flag of the data object specified as PREVIOUS is rewritten to "1", and the current flag of the data object that is in the current state is rewritten to "0".

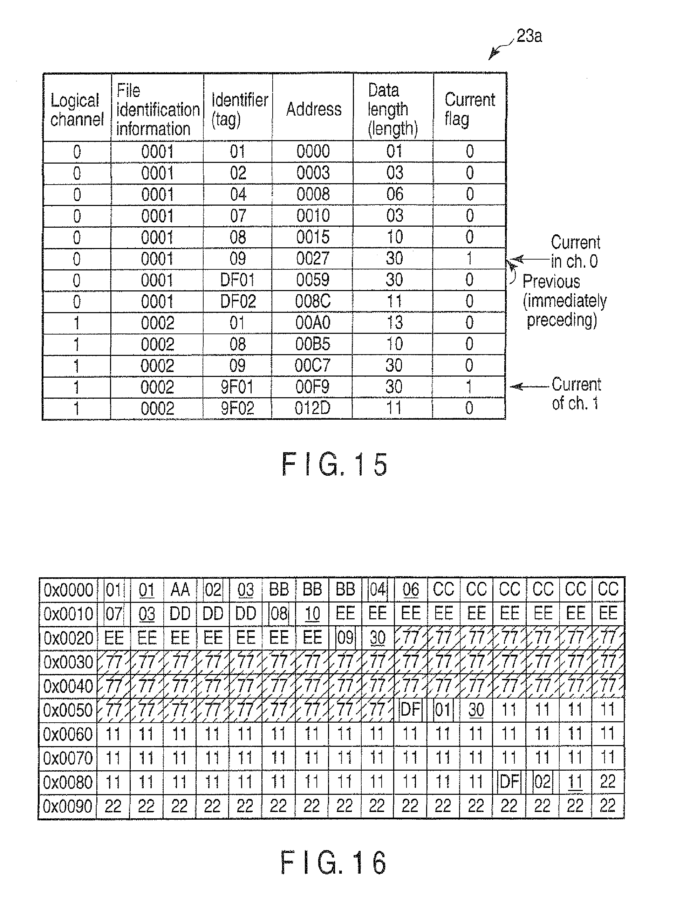

For example, FIG. 15 shows a state of the CURRENT pointer setting table 23a after processing a command specifying PREVIOUS. FIG. 15 depicts a state after processing a command specifying PREVIOUS received when the CURRENT pointer setting table 23a is in the state shown in FIG. 7. That is, when a command specifying PREVIOUS is executed, a current state of a data object is changed to a subsequent data object. This means that a data object whose current flag is set to "1" sequentially shifts every time a command specifying PREVIOUS is executed in such a CURRENT pointer setting table 23a as shown in FIG. 7 or 15.

Based on the above-described procedure, processing for a read command or a write command specifying PREVIOUS is executed. For example, FIG. 16 is a view showing an example of a result of processing based on a write command specifying PREVIOUS. FIG. 16 shows an example of a result of processing for a write command specifying PREVIOUS received when the CURRENT pointer setting table 23a is in a state depicted in FIG. 7.

In the example depicted in FIG. 16, data in a shaded region in the drawing is rewritten in the first EF 34 shown in FIG. 4. "30" as a data length of a data object is stored in a region immediately preceding the data region having the rewritten data depicted in FIG. 16, and "09" as an identifier of the data object is stored in a region immediately preceding this region. That is, in the example shown in FIG. 16, each data value (Value) of the data object having the identifier "09" is rewritten. This data object having the identifier "09" is a data object (a data object specified as PREVIOUS) immediately preceding a data object in the current state shown in the CURRENT pointer setting table 23a depicted in FIG. 7. That is, when the CURRENT pointer setting table 23a is in such a state as depicted in FIG. 7, the IC card 1 having received a write command specifying PREVIOUS rewrites the data object in the first EF 34 in FIG. 4 as shown in FIG. 16.

It is to be noted that the control unit 21 likewise updates the CURRENT pointer setting table 23a when information other than the current flag in the CURRENT pointer setting table 23a varies due to executed processing. For example, when a data length of a data object specified as PREVIOUS is changed due to, e.g., rewrite processing, a top address of each data object following the data object specified as PREVIOUS is also changed. In such a case, the control unit 21 discriminates the changed top address of each data object to update the CURRENT pointer setting table.

In the processing for the read command or the write command specifying PREVIOUS, each data object immediately preceding a data object in the current state as a reference shown in the CURRENT pointer setting table can be sequentially read or written. For example, when a command specifying PREVIOUS is continuously issued, the IC card can efficiently execute processing of sequentially accessing preceding data objects by using the CURRENT pointer setting table with a data object in the current state being determined as a reference.

## Claims

1. A portable electronic device **characterized by** comprising:
a communication interface (25) which performs communication with an external device;
a data memory (22) which stores a record file having a plurality of data objects;
a management table (23a) which stores management information of each data object in the record file as an access target stored in the data memory; and
an access control unit (21, S6) which accesses a data object specified by a command requesting access to the data object based on the management information stored in the management table when the command is received from the external device.

2. The device according to claim 1, further having a table generation unit (21, S5) that generates a management table which stores management information of each data object in the record file when the record file as an access target is selected.

3. The device according to claim 1 or 2, further having a table update unit (21, S7) that updates stored contents in the management table in accordance with contents of processing for a command received from the external device.

4. The device according to claim 1, **characterized in that** the management table (23a) stores information indicative of a data object that is in a current state, and
the access control unit (21, S11-S16) specifies the data object that in the current state from the management table when a command specifying the data object in the current state is received through the communication interface, and accesses the data object based on the management information of the data object specified as being in the current state.

5. The device according to claim 1, **characterized in that** the management table (23a) stores information indicative of a data object that is in a current state, and
the access control unit (21, S20-S28) specifies the data object in the current state from the management table when a command specifying a data object following the data object in the current state is received through the communication interface, and accesses the data object based on the management information of the data object following the data object in the current state.

6. The device according to claim 5, further having a table update unit (21, S29) which updates information indicative of the data object in the current state to information indicating that the next data object specified by the received command is in the current state in the management table.

7. The device according to claim 1, **characterized in that** the management table (23a) stores information indicative of a data object that is in a current state, and
the access control unit (21, S30-S38) specifies the data object in the current state from the management table when a command specifying a data object immediately preceding the data object in the current state is received through the communication interface, and accesses the data object based on the management information of the data object immediately preceding the data object in the current state.

8. The device according to claim 7, further having a table update unit (21, 39) that updates information indicative of the data object in the current state to information indicating that the immediately preceding data object specified by the received command is in the current state in the management table.

9. An access control method in a portable electronic device, **characterized by** comprising:
storing a record file having a plurality of data objects in a data memory (22);
storing management information for the plurality of data objects in the record file as an access target in a table (23a); and
controlling (S6) access to a data object specified by a command specifying a specific data object to request access based on the management information of each data object stored in the table when the command is supplied from an external device.

10. The method according to claim 9, **characterized by** further comprising generating (S5) the table storing the management information of each data object in a selected record file when the record file as the access target is selected.

11. The method according to claim 9, **characterized in that** information indicative of a data object that is in a current state is stored in the table (22); and
the data object in the current state is specified from the table when a command specifying the data object in the current state is received, and the data object is accessed based on the management information of the data object specified as being in the current state in the access control (S11-S16).

12. The method according to claim 9, **characterized in that** information indicative of a data object that is in a current state is stored in the table (22), and
the data object in the current state is specified from the table when a command specifying a data object following the data object in the current state is supplied, and the data object is accessed based on the management information of the data object following the data object in the current state in the access control (S20-S28).

13. The method according to claim 9, **characterized in that** information indicative of a data object that is in a current state is stored in the table (22), and
the data object in the current state is specified from the table when a command specifying a data object immediately preceding the data object in the current state is received, and the data object is accessed based on the management information of the data object immediately preceding the data object in the current state in the access control (S30-S38).
